# EUROPÄISCHE PATENTSCHRIFT

(11) **EP 3 140 609 B1**
(45) Veröffentlichungstag und Bekanntmachung des Hinweises auf die Patenterteilung: **13.09.2017**
(21) Anmeldenummer: 15784005.9
(22) Anmeldetag: 16.10.2015
(51) Int. Cl.: G01B 5/00, B23K 26/03, G01B 11/22

(54) **VORRICHTUNG ZUR MESSUNG DER TIEFE EINER SCHWEISSNAHT IN ECHTZEIT**
DEVICE FOR MEASURING THE DEPTH OF A WELD SEAM IN REAL TIME
DISPOSITIF DE MESURE DE LA PROFONDEUR D'UN CORDON DE SOUDURE EN TEMPS RÉEL

(30) Priorität: 20.10.2014 DE 102014115278
(43) Veröffentlichungstag der Anmeldung: 15.03.2017
(73) Patentinhaber: Precitec GmbH & Co. KG, 76571 Gaggenau-Bad Rotenfels (DE)
(72) Erfinder: MOSER, Rüdiger, 76316 Malsch (DE); BAUTZE, Thibault, 86153 Augsburg (DE); SCHÖNLEBER, Martin, 63743 Aschaffenburg (DE)
(74) Vertreter: Ter Meer Steinmeister & Partner
(86) Internationale Anmeldenummer: PCT/EP2015/074024
(87) Internationale Veröffentlichungsnummer: WO 2016/062636

(56) Entgegenhaltungen:
- WO-A1-2014/138939
- DE-A1- 10 155 203
- US-A1- 2012 285 936
- US-B2- 8 822 875

## Beschreibung

Die vorliegende Erfindung betrifft eine Vorrichtung zur Messung der Tiefe einer Schweißnaht in Echtzeit beim Schweißen oder Fügen eines Werkstücks mittels Strahlung.

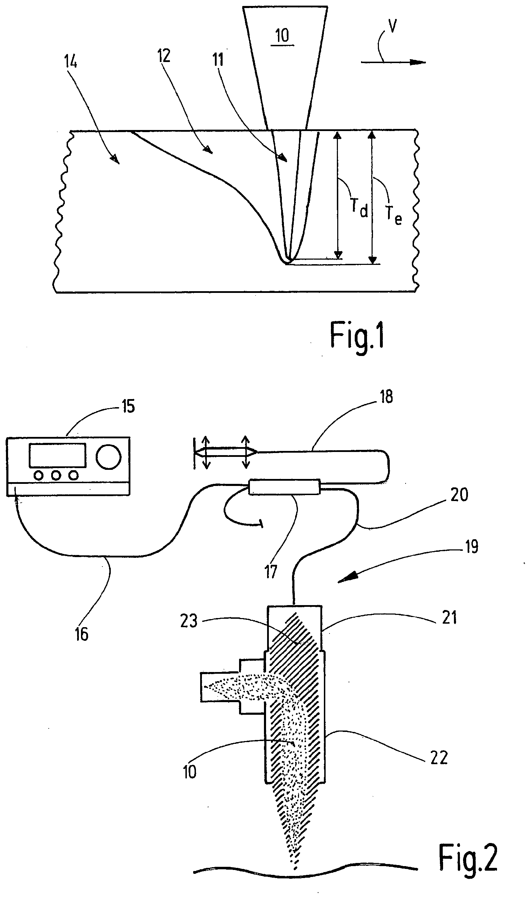

Wie in Figur 1 dargestellt, entsteht beim Lasertiefschweißprozess während eines Schweißvorgangs entlang der Strahlachse des Bearbeitungslaserstrahls 10 eine Dampfkapillare 11, die auch Keyhole genannt wird und die von flüssiger Schmelze 12 umgeben ist. Die Tiefe Td der Dampfkapillare, im Folgenden auch Keyholetiefe genannt, steht in Zusammenhang mit der Schweißnaht- oder Einschweißtiefe Te. In Vorschubrichtung V gesehen hinter der flüssigen Schmelze 12 befindet sich die erstarrte Schmelze 14.

Ist die Tiefe Td des Keyholes 11 bekannt, so kann mit Hilfe von metallografischen Untersuchungen die Einschweißtiefe Te bestimmt und ein Korrekturfaktor zwischen beiden Größen ermittelt werden. Somit ist durch Messen der Keyholetiefe Td und Anwenden des Korrekturfaktors das Messen der Einschweißtiefe Te in Echtzeit möglich. Bei vielen Materialien sind Keyholetiefe Td und Einschweißtiefe Te nahezu identisch, so dass dann auf Korrekturfaktoren verzichtet werden kann. Die Kenntnis der Einschweißtiefe Te ist bei zahlreichen Anwendungen von großer Bedeutung.

Beim Laserschweißen von Metallen gibt es derzeit kein kommerzielles System um die Tiefe der Schweißnaht während dem Schweißprozess direkt zu bestimmen. Somit ist nach dem Schweißprozess nicht bekannt, wie tief in das Material eingeschweißt wurde. Die Einschweißtiefe ist jedoch ein wichtiger Parameter, da eine zu geringe Tiefe fehlende Festigkeit zur Folge haben kann. Im Gegensatz hierzu kann eine zu große Tiefe das Durchschweißen bewirken, wodurch die Schweißnaht auf der Rückseite sichtbar wird.

Um die Einschweißtiefe nachträglich bestimmen zu können wird häufig ein Querschliff angefertigt. Dieses Verfahren stellt eine zerstörerische Prüfungsmethode dar, die teuer und zeitaufwendig ist, weshalb die Kontrolle in der Regel nur stichprobenartig durchgeführt wird. Durch die Bestimmung der Einschweißtiefe in Echtzeit können Schwankungen der Einschweißtiefe ermittelt und durch Anpassen der Parameter korrigiert werden. Hierdurch ist einerseits eine lückenlose Prozesskontrolle gegeben und andererseits wird Ausschuss von unbrauchbarem Material reduziert.

Aus der DE 101 55 203 A1 ist eine Laserbearbeitungsvorrichtung mit einem optischen Messsystem zum Erfassen von Oberflächendaten bekannt, bei dem Messlicht von einer kurzkohärenten Lichtquelle mittels eines Strahlteilers in den Bearbeitungsstrahlengang eingekoppelt wird, so dass die Fokussierung von Messlicht und Bearbeitungslaserlicht durch eine gemeinsame Linse erfolgt. Das rücklaufende Messlicht und eine Referenzwelle werden in ein Messsystem eingegeben, das nach Art eines Interferometers aufgebaut ist.

Für eine Analyse des Bearbeitungsergebnisses und/oder eine Regelung des Bearbeitungsprozesses während eines Fertigungsvorganges wird die Messstelle in einer Bearbeitungszelle vor, an und/oder hinter der Bearbeitungsstelle gewählt. Durch die Messstelle vor der Bearbeitungsstelle können z. B. die Fokuslage, die Werkstückposition, die Werkstückoberfläche und z. B. ein Spalt zwischen Fügepartnern überwacht und geregelt werden. Durch eine Messung an der Bearbeitungsstelle kann z. B. auch die Bearbeitungstiefe überwacht und geregelt werden.

Die DE 10 2007 016 444 A1 beschreibt eine weitere Bearbeitungseinrichtung zur Bearbeitung eines Werkstücks mittels eines hochenergetischen Bearbeitungsstrahls, der für eine Oberflächenabtastung zur Abstandmessung ein Kohärenztomograph zugeordnet ist. Ein Messlichtstrahl wird in einen Bearbeitungsstrahlengang eingekoppelt und gemeinsam mit dem Bearbeitungsstrahl auf das Werkstück fokussiert, so dass der Fokus beider Strahlen in gleicher Ebene liegt. Hiermit werden zur Überwachung des Bearbeitungsprozesses Oberflächenstrukturen auf dem Werkstück erfasst.

Bei einer bekannten Vorrichtung zum Laserstrahllöten (DE 101 51 828 A1), insbesondere Laserstrahlhartlöten ist vorgesehen, dass zur Positionierung des Laserfokus relativ zum Lötdraht eine Fokussierlinse senkrecht zur optischen Achse einer Kollimierlinse linear verschiebbar ist. Um die Relativbewegung der optischen Achsen von Kollimierlinse und Fokussierlinse zu realisieren, kann auch die Laserstrahlzuführung, also das Faserende eines Lichtwellenleiters und die Kollimierlinse gemeinsam verschoben werden.

Die DE 10 2011 078 089 A1 beschreibt ein Verfahren und eine Anordnung zur Abstandsmessung bei einer Laserbearbeitungsanlage, bei der die Reflektion des Bearbeitungsstrahl am Werkstück als Messstrahl dient. Der Messstrahl wird nach dem Prinzip eines kurzkohärenten Interferometers mit einem Referenzstrahl überlagert, der durch einen Strahlteiler aus dem Bearbeitungsstrahl ausgekoppelt wird.

Die WO 2004/045798 A1 beschreibt eine Vorrichtung und ein Verfahren zur Verschiebung und Einstellung des Fokuspunktes eines Bearbeitungslaserstrahls, bei der die Justierung des Fokus durch Verschieben der Fokuslinse ermöglicht wird.

Die DE 10 2009 046 485 A1 beschreibt ein weiteres Verfahren und eine Vorrichtung zum Laserschweißen. Hier wird die axiale Fokuslage des Bearbeitungslaserstrahls durch axiales Verschieben der Kollimierlinse und/oder der Fokussierlinse justiert.

Firma Thorlabs bietet unter der Artikel Nr.: PAFA-X-4-C einen Faserkollimator mit fünf Freiheitsgraden zum Justieren in x, y, z, q, j Richtung an. Dabei ist eine Translation der Kollimierlinse, ein Verkippen des Faserhalters und eine Abstandsänderung zwischen Faserende und Kollimierlinse vorgesehen.

Aus der US 8,822,875 B2 ist ein System zum Bestimmen der Einschweißtiefe beim Laserschweißen in Echtzeit bekannt, bei dem ein Messlichtstrahl kollimiert und in das Keyhole fokussiert wird. Das reflektierte Messlicht wird einem Auswertesystem zugeführt, das eine Breitbandlichtquelle, ein Interferometer und ein Spektrometer umfasst. Das Einkoppeln des Messlichts in den Bearbeitungsstrahlengang ist jedoch nicht beschrieben.

Die WO 2014/138939 A1 beschreibt ebenfalls ein System zum Bestimmen der Einschweißtiefe in Echtzeit gemäß dem Oberbegriff des Patentanspruchs 1. Um die Neigung des Abbildungsstrahls und die Lage seines Auftreffpunktes auf dem Werkstück zu variieren, ist ein schwenkbarer Spiegel im kollimierten Strahlengang des Abbildungsstrahls vorgesehen. Ferner kann die Einstellung der relativen Positionen und Winkel von Laserkopf, Glasfaserkabel, Faseranschlussstecker und Kollimatorlinse verwendet werden, um die Position und die Brennebene des Abbildungsstrahls zu steuern.

Aus der US 2012/0285936 A1 ist eine Laserschweißvorrichtung und ein Laserschweißverfahren bekannt, bei dem ein Messlichtstrahl zur Beobachtung des Wechselwirkungsbereichs zwischen Laserstrahl und Werkstück in den konvergenten Bearbeitungsstrahlengang eingekoppelt wird. Ein optisches Interferometer, das den Messlichtstrahl an eine Fokussierlinse aussendet, empfängt über die Fokussierlinse das vom Wechselwirkungsbereich zwischen Arbeitslaserstrahl und Werkstück reflektierte Messlicht zur Prozessüberwachung.

Aktuell gibt es noch kein kommerzielles System um die Keyholetiefe bzw. die Einschweißtiefe direkt zu messen. Deshalb gibt es auch noch kein System um Messlicht optimal in ein Keyhole einzukoppeln. Kommerziell erhältliche Faserkollimatoren sind nicht darauf ausgelegt Messlicht justierbar (einstellen der x, y, z Richtung und der Strahlaufweitung) so zu kollimieren, dass der Strahl durch einen Schweißkopf optimal in ein Keyhole fokussiert werden kann und die Rückreflektion zurück in die Faser abgebildet wird. In den meisten Fällen ist auch kein Staubschutz gegeben, damit der Kollimator und die enthaltenen Optiken den Bedingungen beim Laserschweißen standhalten.

Um Informationen über das Keyhole beim Lasertiefschweißen zu erhalten, wird bisher eine kamerabasierte koaxiale Beobachtung der Keyholeöffnung eingesetzt, mit der jedoch nur eine flächige Beobachtung des Keyholes und dessen Umgebung, jedoch keine echte Keyholetiefe ermittelt werden kann. Hierfür muss lediglich Fokuslage des Messlichts justiert werden. Ferner ermöglicht eine koaxiale polarisationsabhängige Beobachtung der Keyholeemission Rückschlüsse über Keyholegeometrie, liefert aber keine echte Tiefeninformation.

Als Messverfahren bietet sich hier die sogenannte optische Kohärenztomographie (OCT) an, wie sie bereits in der Augenheilkunde angewendet wird.

Die Aufgabe der vorliegenden Erfindung ist es, eine Vorrichtung zur Messung einer Einschweißtiefe in Echtzeit beim Schweißen oder Fügen bereitzustellen, mit der insbesondere die Tiefe einer dabei auftretenden Dampfkapillare zu verlässig gemessen werden kann, um daraus die Einschweißtiefe zu ermitteln.

Diese Aufgabe wird durch die Vorrichtung nach Anspruch 1 gelöst. Vorteilhafte Weiterbildungen und Ausgestaltungen der Erfindung sind in den abhängigen Ansprüchen beschrieben.

Erfindungsgemäß umfasst eine Vorrichtung zur Messung der Tiefe einer Schweißnaht in Echtzeit beim Schweißen oder Fügen eines Werkstücks mittels Strahlung eine Messlichtquelle, deren Licht von einem Strahlteiler in einen Referenzarm und in einen Messarm eingekoppelt wird; ein Kollimatormodul mit mindestens einer Kollimierlinse zum Kollimieren eines Messlichtstrahls, der dem Kollimatormodul über einen Lichtwellenleiter im Messarm zugeführt wird, und zum Abbilden des von einem zu bearbeitenden Werkstück zurückreflektierten Messlichtstrahls auf eine Austritts/Eintrittsfläche des Lichtwellenleiter; ein Einkopplungselement zum Einkoppeln des Messlichtstrahls in den Strahlengang eines Bearbeitungsstrahls; einer Fokussierlinse zum gemeinsamen Fokussieren des Messlichtstrahls und des Bearbeitungsstrahls auf das Werkstück und zum Kollimieren des zurückreflektierten Messlichtstrahls; und eine Auswerteeinheit zur Bestimmung der Tiefe einer Schweißnaht, in die das vom Werkstück zurückreflektierte Messlicht mit dem überlagerten, zurückreflektierten Licht aus dem Referenzarm gelenkt wird. Das Kollimatormodul umfasst dabei ferner Mittel zur Einstellung der axialen Fokuslage des Messlichtstrahls, Mittel zur Einstellung der lateralen Fokuslage des Messlichtstrahls und eine Feldlinse, die zwischen der Austritts/Eintrittsfläche des Lichtwellenleiter und der Kollimierlinse angeordnet ist und die die Strahlaufweitung des Messlichtstrahls und damit den Fokusdurchmesser des Messlichtstrahls festlegt. Zur lateralen Einstellung der Fokuslage des Messlichtstrahls ist dabei die Austritts/Eintrittsfläche des Lichtwellenleiters mit einer Genauigkeit von ≤10 µm gegen die optische Achse der Kollimierlinse verschiebbar.

Aufgrund des erfindungsgemäß vorgesehenen Kollimatormoduls ist es möglich, das über einen Lichtwellenleiter transportierte Messlicht koaxial mit einem Bearbeitungslaser zu überlagern, in das Keyhole zu fokussieren und anschließend das von dem Keyholeboden reflektierte Licht wieder zurück in den Lichtwellenleiter zu koppeln. Somit kann der Abstand zwischen Keyholeboden und Bearbeitungskopf bestimmt werden und bei bekanntem Abstand zur Materialoberfläche die Keyholetiefe gemessen werden. Insbesondere ist es durch die verschiedenen Einstellmöglichkeiten am Kollimatormodul möglich, das Messlicht derart in das Keyhole zu fokussieren, dass die Intensität des vom Keyholeboden reflektierten Lichts maximal wird.

Erfindungsgemäß ist es also möglich die Strahlformung sowie die Ausrichtung des Messlichtstrahls an den Schweißprozess anzupassen, um ein optimales Messergebnis zu erhalten. Strahlformung und Ausrichtung sind erforderlich, da das Gleichgewicht zwischen umgebender Schmelze und dem in der Dampfkapillare entstehenden Dampfdruck, der während des Schweißprozesses das Keyhole offen hält, von Prozessparametern wie Laserleistung, Vorschubgeschwindigkeit, Material, usw. abhängig ist, weshalb auch die Keyholeform (Öffnung, Neigungswinkel, Tiefe, ...) prozessabhängig ist.

Das Messlicht wird idealerweise über einen Lichtwellenleiter zu dem Bearbeitungskopf geführt. Thermische und mechanische Einflüsse haben bei einem Wellenleiter häufig Einfluss auf die Polarisationsrichtung des geführten Lichts. Hierdurch kommt es zu negativen Auswirkungen bei polarisationssensitiven Elementen wie beispielsweise dem Beugungsgitter das für die chromatische Aufspaltung des Messlichts notwendig ist.

Daher ist bei einer vorteilhaften Ausgestaltung der Erfindung vorgesehen, dass im Kollimatormodul zwischen der Austritts/Eintrittsfläche des Lichtwellenleiter und der Feldlinse ein optisch aktives Bauelement zum Ändern der Polarisation, insbesondere einen Faraday-Rotator angeordnet ist, der die Polarisation des Messlichts um 45° dreht. Durch den Einsatz des 45° Faraday Rotators am Faserende wird die Polarisation der Hin- und Zurücklaufenden Welle so gedreht, dass sie in der Faser stets um 90° zueinander gedreht sind, unabhängig der äußeren Einflüsse auf den Lichtwellenleiter. Somit lassen sich Hin- und zurücklaufende Welle besser voneinander trennen und es wird sichergestellt, dass die Polarisationsrichtungen der zurücklaufenden Lichtwellen von Mess- und Referenzarm am Strahlteiler wieder parallel zueinander stehen, wodurch bei der auftretenden Interferenz die maximal mögliche Modulationstiefe erreicht wird. Ferner werden Laufzeitunterschiede zwischen der s- und p-Polarisationsrichtung ausgeglichen.

Eine vorteilhafte Ausgestaltung der Erfindung zeichnet sich dadurch aus, dass die Austritts/Eintrittsfläche des Lichtwellenleiters einen Neigungswinkel von 8° gegen die Senkrechte zur Faserachse besitzt. Hierdurch wird erreicht, dass der Rückreflex an der Austritts/Eintrittsfläche des Lichtwellenleiters nicht in dessen Kern zurückläuft, sondern im Mantel absorbiert werden kann.

Die Fokussierung des Messlichts in die Keyholeöffnung erfolgt aufgrund der koaxialen Anordnung durch die gleiche Linse, die auch für die Fokussierung des Bearbeitungsstrahls verwendet wird. In der Regel ist diese Linse auf die Bearbeitungswellenlänge optimiert, so dass es bei der Messlichtwellenlänge zu chromatischer Aberration kommt. Deshalb liegen die Foki von Bearbeitungsstrahl und Messlichtstrahl in unterschiedlichen Ebenen. Um den Fokus des Messlichtstrahls dennoch in die Ebene der Keyholeöffnung zu positionieren und eine Kompensation der chromatischen Aberration bereitzustellen, ist erfindungsgemäß vorgesehen, dass zur axialen Einstellung der Fokuslage des Messlichtstrahls die Kollimierlinse in Richtung ihrer optischen Achse gegenüber der Austritts/Eintrittsfläche des Lichtwellenleiter verschiebbar ist.

Alternativ ist es auch möglich, dass zur axialen Einstellung der Fokuslage des Messlichtstrahls die Austritts/Eintrittsfläche des Lichtwellenleiters zusammen mit dem Faraday-Rotator und der Feldlinse gegenüber der Kollimierlinse in Richtung ihrer optischen Achse verschiebbar ist.

Bei einer weiteren Ausgestaltung der Erfindung ist vorgesehen, dass zur lateralen Einstellung der Fokuslage des Messlichtstrahls die Austritts/Eintrittsfläche des Lichtwellenleiters vorteilhafterweise zusammen mit dem Faraday-Rotator verschiebbar ist.

Die Größe der Keyholeöffnung ist stark prozessabhängig. So reduziert sich beispielsweise der Durchmesser der Keyholeöffnung mit abnehmendem Fokusdurchmesser des Bearbeitungsstrahls. Um das Messlicht dennoch vollständig in die Keyholeöffnung zu fokussieren ist eine Anpassung des Messlichtstrahls an die Prozessparameter erforderlich. Neben den Eigenschaften des Bearbeitungsstrahls spielt auch das zu schweißende Objekt eine Rolle bei der Keyholegeometrie. Schweißversuche habe gezeigt, dass Blindschweißungen einen kleineren Fokusdurchmesser des Messlichtstrahls erfordern als beispielsweiße Schweißungen an Stumpfstößen.

Deshalb ist bei einer vorteilhaften Ausgestaltung der Erfindung vorgesehen, dass die Feldlinse austauschbar im Kollimatormodul angeordnet ist. Damit ist eine Anpassung der Fokusgröße an den Prozess möglich, wobei die Fokuslage unverändert bleibt.

Neben der Größe ist auch die Form der Keyholeöffnung und der Neigungswinkel prozessabhängig. So nimmt mit zunehmender Vorschubgeschwindigkeit der Neigungswinkel des Keyholes zu, während die Öffnung eine elliptische Form annimmt. Um für ein optimales Messergebnis den Messlichtstrahl in Bezug auf Ausrichtung und Neigung anpassen zu können, ist erfindungsgemäß vorgesehen, dass das Kollimatormodul senkrecht zur optischen Achse des Bearbeitungslaserstrahls verschiebbar an einem den Bearbeitungslaserstrahl führenden Schweißkopf angeordnet ist.

Dabei ist das Kollimatormodul zweckmäßigerweise mittels eines Adapterstücks verschiebbar am Schweißkopf gehalten, das vorzugsweise rotierend ausgebildet ist, so dass das Kollimatormodul in eine beliebige Richtung verschoben werden kann.

Rückreflexe an Oberflächen im Strahlengang (Linsen, Strahlteiler, Schutzgläser, ...), insbesondere an ebenen Oberflächen erzeugen zusätzliche Interferenzen. Da es sich bei dem Messverfahren um eine interferenzbasierte Methode handelt, erzeugen diese zusätzlichen Interferenzen Störsignale. Die Rückreflexe an der Vorder- und Rückseite einer planparallelen Platte bewirken beispielsweise ein Interferenzsignal, das nach der Auswertung ein Signal liefert, das der optischen Dicke der Platte entspricht. Durch eine Referenzmessung können diese Störsignale zwar eliminiert werden, allerdings reduziert sich die Sensitivität des Messsystems in diesen Bereichen erheblich. Deshalb ist erfindungsgemäß ein vor der Fokussierlinse angeordnetes Schutzglas mit einer Neigung von mehr als 3° gegen die Senkrechte zur optischen Achse des Bearbeitungsstrahlengangs geneigt, so dass Rückreflexe in den Wellenleiter so weit wie möglich reduziert werden.

Die Erfindung wird im Folgenden beispielsweise anhand der Zeichnung näher erläutert. Es zeigen:
- Figur 1: eine schematische Schnittansicht eines Werkstücks zur Darstellung einer Dampfkapillare (Keyhole) beim Schweißen;
- Figur 2: ein schematisches Darstellung einer erfindungsgemäßen Vorrichtung zur Messung der Einschweißtiefe in Echtzeit;
- Figur 3: eine schematische Darstellung eines Schweißkopfes mit einem optischen System zum Einkoppeln eines Messlichtstrahls zur Einschweißtiefenmessung;
- Figur 4: eine schematische Darstellung des optischen Systems mit angepasster Strahlaufweitung für große (Fig. 4a) und kleine (Fig. 4b) Fokussierbrennweiten;
- Figur 5: eine schematische Darstellung eines Schweißkopfes ähnlich dem gemäß Figur 3 mit zusätzlicher koaxialer Prozessüberwachung mit Kamera oder Fotodioden;
- Figur 6: eine schematische Darstellung eines Schweißkopfes ähnlich dem gemäß Figur 3 mit seitlich verschiebbaren optischen System; und
- Figur 7: eine perspektivische Darstellung des in einem Gehäuse angeordneten optischen Systems.

In den verschiedenen Figuren der Zeichnung sind einander entsprechende Bauteile und Elemente mit gleichen Bezugszeichen versehen.

Erfindungsgemäß ist ein optisches System, im folgenden Kollimatormodul genannt, vorgesehen, um Messlicht von ein Messsystem durch einen Schweißkopf in ein Keyhole zu fokussieren und das am Keyholeboden reflektierte Messlicht wieder zurück in das Messsystem zu lenken.

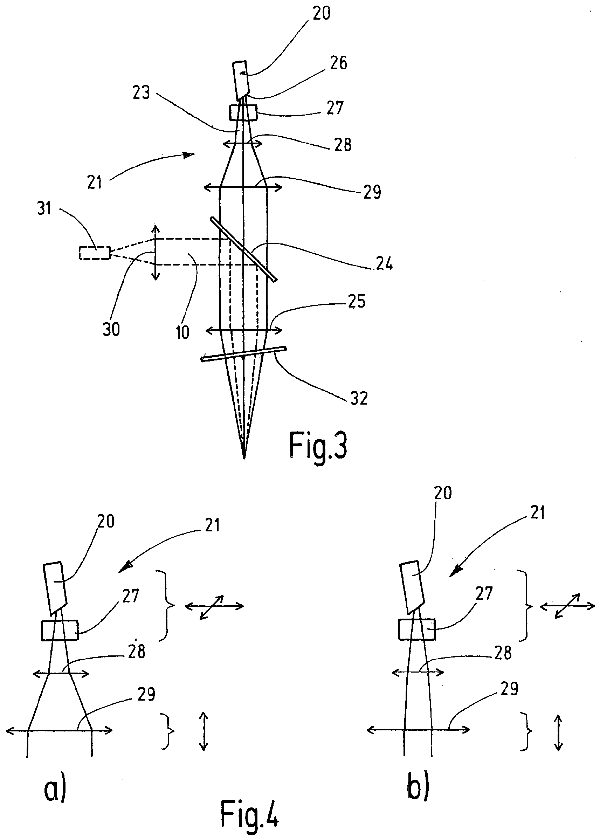

Figur 2 zeigt die vollständige Vorrichtung zur Bestimmung der Keyholetiefe in Echtzeit. Die Bestimmung oder Messung der Keyholetiefe Td basiert auf dem Prinzip der optischen Kohärenztomographie, die sich unter Zuhilfenahme eines Interferometers die Kohärenzeigenschaften von Lichts zunutze macht. Eine Auswerteeinheit 15 enthält hierzu eine breitbandige Lichtquelle (Superlumineszenzdiode, SLD), die das Messlicht in einen Lichtwellenleiter 16 koppelt. In einem Strahlteiler 17, der vorzugsweise einen Faserkoppler aufweist, wird das Messlicht in einen Referenzarm 18 und einen Messarm 19 aufgespalten, der einen Lichtwellenleiter 20, das Kollimatormodul 21 und den Schweißkopf 22 umfasst. Das Kollimatormodul 21 dient dazu, das aus dem Lichtwellenleiter 20 austretende Messlicht (Messlichtstrahl 23) zu kollimieren, damit es im Schweißkopf 22 mit dem Bearbeitungsstrahl 10 koaxial überlagert werden kann. Die Überlagerung erfolgt, wie in Figur 3 näher dargestellt, mittels eines als Einkopplungselement dienenden teildurchlässigen, insbesondere dichroitischen Spiegels 24. Anschließend werden Bearbeitungslaserstrahl 10 und Messlichtstrahl 23 durch eine gemeinsame Linse 25, im Folgenden Fokussierlinse genannt, fokussiert. Fokuslage und Fokusdurchmesser des Messlichtstrahls sind dabei so eingestellt, dass das Messlicht in das Keyhole, also in die Dampfkapillare gelenkt wird. Das aus dem Keyhole zurückreflektierte Messlicht wird durch die Fokussierlinse 25 und das Kollimatormodul 21 auf die Austritts/Eintrittsfläche 26 des Lichtwellenleiter 20 abgebildet, im Faserkoppler 17 mit dem zurückreflektierten Licht aus dem Referenzarm 18 überlagert und anschließend zurück in die Auswerteeinheit 15 gelenkt. Das überlagerte Licht enthält Informationen über den Weglängenunterschied zwischen dem Referenzarm 18 und dem Messarm 19. Diese Informationen werden in der Auswerteeinheit 15 ausgewertet, wodurch der Benutzer Informationen über den Abstand zwischen Keyholeboden und Schweißkopf 22 erhält.

Figur 3 zeigt die optischen Elemente, die innerhalb des Schweißkopfs 22 und des Kollimatormoduls 21 verbaut sind. Das Ende des Lichtwellenleiters 20, durch den das Messlicht zum Schweisskopf 22 geführt wird, weißt als Austritts/Eintrittsfläche 26 ein schräg geschliffenes Faserende auf. Durch den Schrägschliff wird verhindert, dass es zu Rückreflektionen am Faserende aufgrund der Fresnel-Reflektion kommt, die zusätzliche Interferenzen zur Folge haben würde. Das am schrägen Faserende zurückreflektierte Licht überschreitet den Grenzwinkel der Totalreflektion, weshalb es nicht im Kern der Faser geführt, sondern im Mantelmaterial absorbiert wird. Typischerweise werden am Faserende FC/APC oder E2000 APC Stecker verbaut (APC=Angled Physical Contact), die einen Winkel von 8° gegen die Senkrechte zur Faserachse besitzen.

Nach dem Austritt aus dem Faserstecker durchläuft das Messlicht ein optisch aktives Bauelement zum Ändern der Polarisation, insbesondere einen Faraday-Rotator 27. Dieser dreht die Polarisation des Lichts um 45°. Nachdem das Messlicht am Keyholeboden reflektiert wurde durchläuft es den Faraday-Rotator 27 erneut. Trotz der entgegengesetzten Ausbreitungsrichtung wird die Polarisation erneut um 45° in die gleiche Richtung gedreht, so dass die Polarisation des zurücklaufenden Messlichts um 90° gegenüber der Polarisation des ankommenden Messlichts gedreht ist. Dadurch wird sichergestellt, dass der optische Gesamtweg (Hin- und Rückrichtung) für beide Polarisationsmoden gleich groß ist und es hier zu keinem Wegunterschied kommt unabhängig davon wie die Polarisation in dem Lichtwellenleiter aufgrund von Verwindungen verändert wird. Bewegungen des Lichtwellenleiters 20 haben somit weniger Einfluss auf das Messsignal. Weiterhin wird sichergestellt, dass die Polarisationsrichtungen der zurücklaufenden Lichtwellen von Mess- und Referenzarm am Strahlteiler wieder parallel zueinander stehen, wodurch bei der auftretenden Interferenz die maximal mögliche Modulationstiefe erreicht wird.

Nach dem Faraday-Rotator 27 folgt eine Feldlinse 28, mit deren Hilfe die Divergenz des aus dem Lichtwellenleiter 20 austretenden Messlichtstrahls 23 beeinflusst werden kann. Beispielsweise weist der austretende Messlichtstrahl 23 eine Nummerische Apertur von 0,14 auf, wenn ein Lichtwellenleiter der Marke Corning SMF-28 verwendet wird. Durch Beeinflussen der Divergenz kann die Strahlaufweitung variiert werden. Somit kann einerseits bei gegebener Fokussierbrennweite der Fokussierlinse 25 die Fokusgröße des Messflecks, also der Fokusdurchmesser verändert werden und ein auf den Schweißprozess abgestellter optimierter Kompromiss zwischen Fokusgröße und Schärfentiefe gefunden werden. Andererseits kann durch Anpassen der Strahlaufweitung bei unterschiedlichen Fokussierbrennweiten die Fokusgröße des Messflecks konstant gehalten werden. Die Änderungen der Linsenkonfiguration ziehen nur minimale Änderungen in den Linsenabständen mit sich, weshalb sich mehrere Konfigurationen innerhalb eines Gehäuses realisieren lassen, wodurch sich die mechanischen Anpassungen auf ein Minimum beschränken.

Im Fall einer Feldlinse 28 mit plan-konkaver Oberfläche bildet die konkave Oberfläche im korrekt eingebauten Zustand (gekrümmte Seite in Richtung des Fasersteckers) einen Hohlspiegel. Trotz Antireflexbeschichtung wird ein geringer Teil des einfallenden Lichts zurückreflektiert. Die konkave Seite der Feldlinse würde dieses Licht wieder auf die Faser abbilden, wodurch Störeinflüsse entstehen können. Deshalb wurde bei der Verwendung von plan-konkaven Linsen ein Kompromiss zwischen Abbildungsfehlern und dem Licht gemacht, das in die Faser zurückreflektiert wird.

Der divergente Messlichtstrahl 23 wird hinter der Feldlinse 28 durch eine Kollimierlinse 29 kollimiert. Zum Reduzieren von Abbildungsfehlern wird vorzugsweise eine asphärische Linse verwendet. Alternativ können auch Linsen zum Einsatz kommen, die zwei sphärische Oberflächen besitzen, deren Radien so gewählt sind, dass die sphärische Aberration minimiert wird. Es können aber auch Linsen zum Einsatz kommen, die aus einem Glas mit axialem Gradienten hergestellt sind, wodurch sich besonders die sphärische Aberration korrigieren lässt. Weiterhin können Dublett- oder Triplettlinsen verwendet werden.

Mit der Kollimierlinse 29 endet das Kollimatormodul 21. Der kollimierte Messlichtstrahl 23 wird über den dichroitischen Spiegel 24 mit dem kollimierten Bearbeitungslaserstrahl 10 koaxial überlagert. In dem gezeigten Beispiel in Figur 3 weist der dichroitische Spiegel idealerweise eine hohe Reflektion für den Bearbeitungslaserstrahl 10 auf und eine hohe Transmission für den Messlichtstrahl 23. Die Kollimation des Bearbeitungslaserstrahls 10 findet durch eine Kollimierlinse 30 statt. Das Bearbeitungslaserlicht wird häufig über einen Lichtwellenleiter 31 zum Schweisskopf 22 geführt.

Bearbeitungslaserstrahl 10 und Messlichtstrahl 23 werden durch die gemeinsame Fokussierlinse 25 auf die Werkstückoberfläche fokussiert. Zum Schutz vor Verunreinigungen befindet sich in der Regel ein Schutzglas 32 vor der Fokussierlinse 25. Bei einem senkrecht zum Strahlengang angeordneten Schutzglas 32 tritt in der Regel ein Rückreflex an der Vorder- und Rückseite auf. Diese beiden Rückreflexe interferieren miteinander und werden auf das Faserende abgebildet und somit in der Auswerteeinheit ausgewertet, wodurch sich ein Abstandssignal ergibt, das gerade der optischen Dicke des Schutzglases 32 entspricht. Die typische Dicke eines Schutzglases liegt bei 1,5 bis 2 mm. Somit ergibt sich ein Abstandssignal welches in dem Bereich liegt, in dem typische Einschweißtiefen gemessen werden. Um dieses Störsignal zu minimieren wird das Schutzglas 32 vorzugsweise schräg eingebaut. Somit werden die Rückreflexe nicht mehr vollständig auf das Faserende abgebildet und das Störsignal deutlich reduziert. Der Neigungswinkel eines Schutzglases liegt vorzugsweise bei Werten >3° gegenüber der Senkrechten zur optischen Achse des Bearbeitungsstrahlengangs.

Typische Fokusdurchmesser des Bearbeitungsstrahls beim Lasertiefschweißen variieren zwischen ca. 200 - 600 µm. Die Keyholeöffnung weist in der Regel einen geringeren Durchmesser auf, weshalb das Messlicht auf einen Durchmesser fokussiert werden muss, der kleiner als der Bearbeitungsstrahl ist. Gleichzeitig werden in vielen Anwendungen Einschweißtiefen von mehreren Millimetern realisiert, wodurch sich ein großes Aspektverhältnis zwischen Keyholetiefe und dessen Durchmesser ergibt. Es ist daher erforderlich, das Messlicht optimal in die Keyholeöffnung zu fokussieren, so dass möglichst viel Licht von dem Keyholeboden zurückreflektiert wird und zur Analyse bereitsteht.

Um hierzu den Fokus des Messlichtstrahls 23 in drei Dimensionen auf die Keyholeöffnung justieren zu können, müssen optische Elemente im Bereich der Kollimation, also im Kollimatormodul beweglich gelagert sein. Bei Schweißprozessen kommen in der Regel relativ große Fokussierbrennweiten im Bereich von 150 bis 1000 mm zum Einsatz. Für einen optimalen Kompromiss zwischen Fokusdurchmesser und Schärfentiefe des Messlichtstrahls, sind Kollimierbrennweiten zwischen 50 bis 100 mm erforderlich. Durch das Abbildungsverhältnis zwischen Kollimierbrennweite und Fokussierbrennweite werden Bewegungen von optischen Elementen im Bereich der Kollimation in der Bildebene deutlich verstärkt. Deshalb ist eine entsprechend feinmechanische Einstellmöglichkeit notwendig. Bei Verwendung einer f=300 mm Fokussierbrennweite und einer Kollimierbrennweite von f=50 mm ergibt sich ein Abbildungsverhältnis von 1:6. Möchte man den Messfleck, also den Fokus des Messlichtstrahls 23 in der Bildebene auf 50 µm genau positionieren, so muss beispielsweise das Faserende, also die Austritts/Eintrittsfläche 26 des Wellenleiters 20 in der Objektebene auf 8 µm genau positioniert werden.

Figur 4a zeigt die Einstellmöglichkeiten, die an dem Kollimatormodul 21 vorgesehen sind, damit der Fokus des Messlichtstrahls 23, also der Messfleck in drei Raumrichtungen optimal in die Keyholeöffnung justiert werden kann. Die axiale Einstellung des Fokus erfolgt durch axiales Verschieben der Kollimierlinse 29. Hierdurch wird der kollimierte Strahl etwas divergent oder konvergent, wodurch sich die Lage des Fokus axial verschiebt. Alternativ zu der Verschiebung der Kollimierlinse 29 kann auch die Einheit bestehend aus Faserende, Faraday-Rotator 27 und Feldlinse 28 verschoben werden. Die laterale Justierung des Fokus erfolgt durch laterales Verschieben des Fasersteckers, also des Endes des Lichtwellenleiters 20 gegenüber der optischen Achse der Kollimierlinse 29.

Durch Simulationen konnte gezeigt werden, dass durch die off-axis Anordnung des Faserendes, also durch die gegen die optische Achse versetzte Anordnung des Faserendes bei den benötigten Verschiebewegen von 1 bis 2 mm noch keine signifikanten Abbildungsfehler auftreten. Aufgrund der begrenzten Apertur des verwendeten Faraday-Rotators 27 wird dieser ebenfalls mit dem Faserstecker lateral verschoben. Durch das Abbildungsverhältnis zwischen Kollimation und Fokussierung, also durch das Brennweitenverhältnis von Kollimierlinse 29 und Fokussierlinse 25 wird die Verstellbewegung im Bereich des Fokus deutlich verstärkt. Im Fall der lateralen Verschiebung beträgt die Verstärkung bei einer typischen Schweißkopfkonfiguration (Kollimierbrennweite f_{col}=50 mm und Fokussierbrennweite f_{foc}=300 mm) einen Faktor 6. Um das Messlicht dennoch präzise in die Keyholeöffnung zu fokussieren ist eine Auflösung der Justiereinheit von ≤10 µm erforderlich.

Abhängig von den Prozessparametern weist die Keyholeöffnung einen Durchmesser im Bereich weniger 100 µm auf. Die Tiefe kann sich jedoch über mehrere Millimeter erstrecken. Aufgrund dieses großen Aspektverhältnisses kommt es an den Wänden des Keyholes zu Absorption und Streuung, so dass lediglich ein geringer Bruchteil des eingestrahlten Lichts am Keyholeboden reflektiert wird, das Keyhole wieder verlässt und durch die Bearbeitungsoptik eingesammelt wird. Aus diesem Grund muss das zur Verfügung stehende Messlicht möglichst vollständig in das Keyhole fokussiert werden, damit nicht schon bei der Einkopplung signifikante Verluste auftreten. Weiterhin ist es vorteilhaft die Anzahl der Reflektionen an der Keyhole-Seitenwand minimal zu halten, um Absorption und Streuung zu minimieren. Dies kann durch eine große Schärfentiefe des fokussierten Messlichts erzielt werden, die durch eine entsprechende Strahlaufweitung eingestellt wird. Da ein kleiner Fokusdurchmesser auch eine geringe Schärfentiefe zur Folge hat, muss ein Kompromiss zwischen beiden Größen gefunden werden.

Figur 4b zeigt beispielhaft wie bei gegebener Kollimierbrennweite die Strahlaufweitung durch Austauschen der Feldlinse 28 geändert werden kann. Bei konstanter Fokussierbrennweite ergibt sich durch den geringeren Strahldurchmesser eine größere Schärfentiefe sowie ein größerer Fokusdurchmesser.

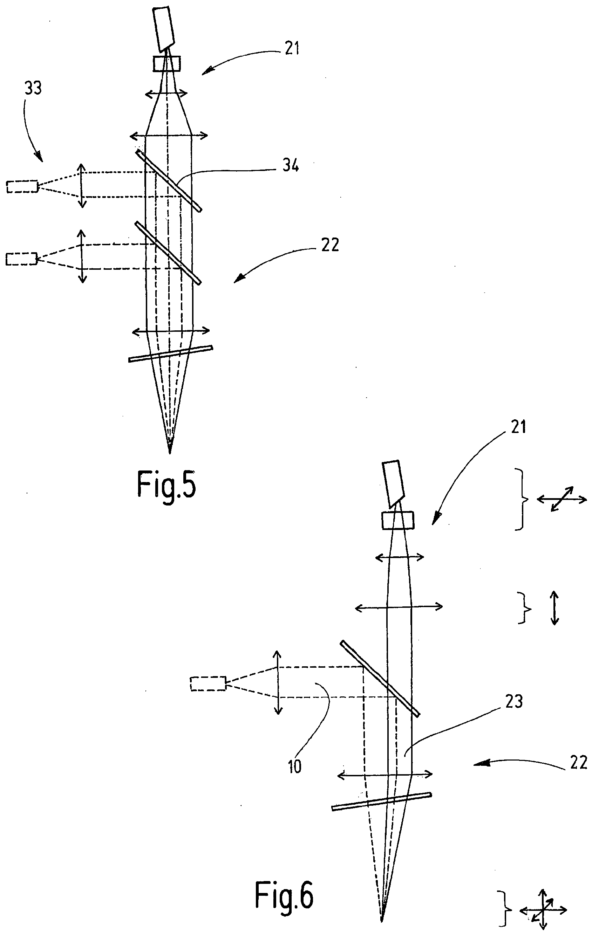

Bei vielen Anwendungen des Laserschweißens wird für die Prozessbeobachtung ein koaxiales Kamera- oder Fotodioden-basiertes System 33 eingesetzt. In Kombination mit der koaxialen Einschweißtiefenmessung kann wie in Figur 5 gezeigt ein zusätzlicher dichroitischer Spiegel 34 verwendet werden, um das Messlicht vom Kollimatormodul 21 von der restlichen Prozessbeobachtung zu trennen.

Bei Prozessen mit hoher Vorschubgeschwindigkeit ändert sich die Neigung des Keyholes 11. Zur besseren Einkopplung des Messlichtstrahls 23 kann es daher vorteilhaft sein, die optische Achse des Messlichtstrahls 23, die durch die optische Achse der Kollimierlinse 29 festgelegt wird, ebenfalls zu neigen, wobei der Bearbeitungslaserstrahl 10 unverändert bleibt. Figur 6 zeigt beispielhaft eine Möglichkeit den auf das Keyhole 11 treffenden Messlichtstrahl 23 schräg einfallen zu lassen. Zu diesem Zweck wird das gesamte Kollimatormodul 21 senkrecht zur optischen Achse des Bearbeitungslaserstrahls 10 verschoben. Mit zunehmender Verschiebung nimmt die Neigung zu, wodurch eine Anpassung an die Vorschubgeschwindigkeit und damit an die Keyholeneigung möglich wird.

Der Vorteil dieses Verfahrens besteht darin, dass die Einstellungen am Kollimatormodul 21 und am Schweißkopf 22 selbst unverändert bleiben. Die Verschiebung kann durch ein nicht näher dargestelltes Adapterstück zwischen Kollimatormodul 21 und Schweißkopf 22 erfolgen, so dass eine kostengünstige Nachrüstung möglich ist. Das Adapterstück kann weiterhin rotierend ausgebildet sein, so dass das Kollimatormodul 21 in eine beliebige Richtung verschoben werden kann. Somit kann ein richtungsunabhängiger Schweißprozess durchgeführt werden.

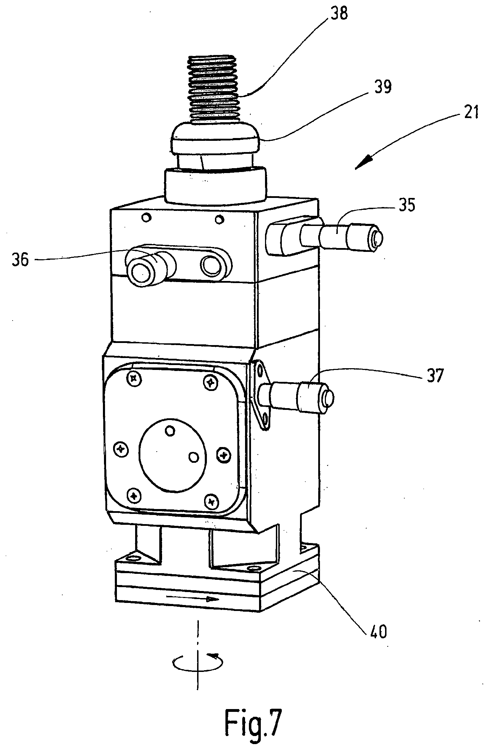

Während des Betriebs eines Schweißkopfes 22 entstehen Verunreinigungen wie Schweißspritzer und Stäube. Deshalb müssen die Optiken und die feinmechanischen Verstellmöglichkeiten im Kollimatormodul 21 im industriellen Umfeld vor äußeren Einflüssen geschützt werden. Daher ist eine trotz der feinmechanischen Verstellmöglichkeiten robuste, staubdichte Konstruktion erforderlich. Hierfür ist ein Gehäuse erforderlich das entsprechenden Schutz bietet und dennoch eine hochpräzise Einstellmöglichkeit auf engem Bauraum bietet. Zu diesem Zweck wurde ein Gehäuse entworfen (Figur 7), das abgesehen von Einstellschrauben 35, 36 und 37 außen keine beweglichen Teile aufweist. In nicht näher dargestellter Weise bewegt sich der Faserstecker innerhalb eines Metall-PVC-Schlauches 38, wodurch keine zusätzlichen Reibungskräfte auftreten. Eine kundenseitige Demontage des Lichtwellenleiters 20 ist durch Lösen einer Überwurfmutter 39 dennoch gegeben.

Da das Keyhole 11 nur während des Schweißprozesses auftritt, kann eine exakte Justierung des Messlichtstrahls in das Keyhole 11 nur während dem Schweißvorgang stattfinden. Da eine Vielzahl von Prozessparametern Einfluss auf das Keyhole haben (Vorschubgeschwindigkeit, Material, Schweißgeometrie, Laserleistung,...) muss die Messfleckposition individuell für jeden Schweißprozess ermittelt werden. Für die Justierung sind mehrere Varianten möglich.□
1. Eine manuelle iterative Ausrichtung des Messflecks auf das Keyhole 11 durch Drehen an den Einstellschrauben 35, 36 und 37.
2. Eine iterative Verstellung, bei der die Einstellschrauben 35, 36 und 37 motorisch angetrieben werden.□
3. Eine motorische Verstellung kombiniert mit einem Suchalgorithmus, um die Keyholeposition während eines Schweißprozesses automatisch zu suchen.

Durch das Kollimatormodul 21 können Schweißköpfe 21 so erweitert werden, dass ein Messlichtstrahl optimal in die entstehende Keyholeöffnung fokussiert werden kann. Hierdurch wird es möglich die Keyholetiefe und somit die Einschweißtiefe durch das Messprinzip der optischen Kohärenztomographie in Echtzeit zu bestimmen.

Durch die Justagemöglichkeit des Kollimatormoduls lässt sich der Fokus des Messlichtstrahls bezüglich des Bearbeitungsstrahls auch in den Vor- bzw. Nachlauf justieren. Im Vorlauf kann somit der Abstand zum Oberblech gemessen werden und die axiale Fokuslage des Bearbeitungsstrahls angepasst werden. Dies ist insbesondere beim Laserschneiden von nichtmetallischen Materialien vorteilhaft, da hier eine kapazitive Abstandsmessung nicht möglich ist. Im Nachlauf kann beim Laserschweißen die Nahtoberraupe vermessen werden, wodurch Rückschlüsse auf mögliche Prozessfehler gezogen werden können.

Durch eine motorische Verstellung ist es möglich, vor, während und nach dem Prozess Abstandsmessungen durchzuführen, indem der Messlichtstrahl periodisch die unterschiedlichen Positionen erfasst. Somit können Abstand zum Oberblech, Einschweißtiefe und Qualität der Naht mit einem Messsystem erfasst werden. Neben den motorisch angetriebenen Verstellmöglichkeiten lässt sich eine Abstandsmessungen an mehreren Punkten auch durch ein System von Scannerspiegel realisieren, die zwischen Feldlinse 28 und Kollimierlinse 29 angeordnet sind und den Messlichtstrahl ablenken. Als weitere Alternative bieten sich mehrere nebeneinanderliegende Faserenden an, die über einen Faserumschalter einzeln angesprochen werden können.

Durch geeignete Strahlformung innerhalb des Kollimatormoduls können auch bei einem statischen Messlichtstrahl Abstandssignale von mehreren Positionen erfasst werden. Wird beispielsweise eine Keilplatte teilweise in den Strahlengang integriert, so spaltet sich der Messlichtstrahl in zwei Teilstrahlen auf, die beide ein unabhängiges Abstandssignal liefern. Somit ist es möglich den Abstand zur Werkstückoberfläche und die Keyholetiefe zeitgleich zu erfassen.

## Patentansprüche

1. Vorrichtung zur Messung der Tiefe einer Schweißnaht in Echtzeit beim Schweißen oder Fügen eines Werkstücks mittels Strahlung, mit seiner Messlichtquelle, deren Licht von einem Strahlteiler (17) in einen Referenzarm (18) und in einen Messarm (19) eingekoppelt wird;
- einem Kollimatormodul (21) mit mindestens einer Kollimierlinse (29) zum Kollimieren eines Messlichtstrahls (23), der dem Kollimatormodul (21) über einen Lichtwellenleiter (20) im Messarm (19) zugeführt wird, und zum Abbilden des von einem zu bearbeitenden Werkstück zurück reflektierten Messlichtstrahls (23) auf eine Austritts/Eintrittsfläche (26) des Lichtwellenleiter (20);
- einem Einkopplungselement (24) zum Einkoppeln des Messlichtstrahls (23) in den Strahlengang eines Bearbeitungsstrahls (10);
- einer Fokussierlinse (25) zum gemeinsamen Fokussieren des Messlichtstrahls (23) und des Bearbeitungsstrahls (10) auf das Werkstück und zum Kollimieren des zurückreflektierten Messlichtstrahls (23); und
- einer Auswerteeinheit (15) zur Bestimmung der Tiefe einer Schweißnaht, in die das vom Werkstück zurückreflektierte Messlicht mit dem überlagerten, zurückreflektierten Licht aus dem Referenzarm (18) gelenkt wird;
- wobei das Kollimatormodul (21) Mittel zur Einstellung der axialen Fokuslage des Messlichtstrahls (23) und Mittel zur Einstellung der lateralen Fokuslage des Messlichtstrahls (23) umfasst,
**dadurch gekennzeichnet, dass** das Kollimatormodul (21) ferner eine Feldlinse (28) umfasst, die zwischen der Austritts/Eintrittsfläche (26) des Lichtwellenleiter (20) und der Kollimierlinse (29) angeordnet ist und die die Strahlaufweitung des Messlichtstrahls (23) und damit den Fokusdurchmesser des Messlichtstrahls (23) festlegt, und
dass zur lateralen Einstellung der Fokuslage des Messlichtstrahls (23) die Austritts/Eintrittsfläche (26) des Lichtwellenleiters (20) mit einer Genauigkeit von ≤10 µm gegen die optische Achse der Kollimierlinse (29) verschiebbar ist.

2. Vorrichtung nach Anspruch 1, **dadurch gekennzeichnet, dass** im Kollimatormodul (21) zwischen der Austritts/Eintrittsfläche (26) des Lichtwellenleiter (20) und der Feldlinse (28) ein optisch aktives Bauelement zum Ändern der Polarisation, insbesondere einen Faraday-Rotator (27) angeordnet ist, der die Polarisation des Messlichts um 45° dreht.

3. Vorrichtung nach Anspruch 1 oder 2, **dadurch gekennzeichnet, dass** die Austritts/Eintrittsfläche (26) des Lichtwellenleiter (20) einen Neigungswinkel von 8° gegen die Senkrechte zur Faserachse besitzt.

4. Vorrichtung nach Anspruch 1, 2 oder 3, **dadurch gekennzeichnet, dass** zur axialen Einstellung der Fokuslage des Messlichtstrahls (23) die Kollimierlinse (29) in Richtung ihrer optischen Achse gegenüber der Austritts/Eintrittsfläche (26) des Lichtwellenleiter (20) verschiebbar ist.

5. Vorrichtung nach Anspruch 2, **dadurch gekennzeichnet, dass** zur axialen Einstellung der Fokuslage des Messlichtstrahls (23) die Austritts/Eintrittsfläche (26) des Lichtwellenleiters (20) zusammen mit dem Faraday-Rotator (27) und der Feldlinse (28) gegenüber der Kollimierlinse (29) in Richtung ihrer optischen Achse verschiebbar ist

6. Vorrichtung nach Anspruch 2, **dadurch gekennzeichnet, dass** die Austritts/Eintrittsfläche (26) des Lichtwellenleiters (20) zusammen mit dem Faraday-Rotator (27) verschiebbar ist.

7. Vorrichtung nach einem der vorstehenden Ansprüche, **dadurch gekennzeichnet, dass** die Feldlinse (28) austauschbar im Kollimatormodul (21) angeordnet ist.

8. Vorrichtung nach einem der vorstehenden Ansprüche, **dadurch gekennzeichnet, dass** das Kollimatormodul (21) senkrecht zur optischen Achse des Bearbeitungslaserstrahls (10) verschiebbar an einem den Bearbeitungslaserstrahl (10) führenden Schweißkopf (22) angeordnet ist.

9. Vorrichtung nach Anspruch 8, **dadurch gekennzeichnet, dass** das Kollimatormodul (21) mittels eines Adapterstücks (40) verschiebbar am Schweißkopf (22) gehalten ist.

10. Vorrichtung nach Anspruch 9, **dadurch gekennzeichnet, dass** das Adapterstück (40) rotierend ausgebildet ist, so dass das Kollimatormodul (21) in eine beliebige Richtung verschoben werden kann.

11. Vorrichtung nach einem der vorstehenden Ansprüche, **dadurch gekennzeichnet, dass** vor der Fokussierlinse (25) ein Schutzglas (32) angeordnet ist, das eine Neigung von mehr als 3° gegen die Senkrechte zur optischen Achse des Bearbeitungsstrahlengangs geneigt ist.

## Claims

1. A device for measuring the depth of a weld seam in real time while welding or joining a workpiece by means of radiation, with a measuring light source, the light of which is coupled into a reference arm (18) and into a measuring arm (19) by a beam splitter (17);
- a collimator module (21) with at least one collimating lens (29) for collimating a measuring light beam (23), which is fed to the collimator module (21) via an optical waveguide (20) in the measuring arm (19), and for projecting the measuring light beam (23) reflected by a workpiece to be processed on an output face/input face (26) of the optical waveguide (20);
- a coupling element (24) for coupling the measuring light beam (23) into the beam path of a processing beam (10);
- a focusing lens (25) for jointly focusing the measuring light beam (23) and the processing beam (10) on the workpiece and for collimating the reflected measuring light beam (23); and
- an evaluation unit (15) for determining the depth of a weld seam, into which the measuring light reflected by the workpiece is guided together with the superimposed reflected light from the reference arm (18);
- wherein the collimator module (21) comprises means for adjusting the axial focal position of the measuring light beam (23) and means for adjusting the lateral focal position of the measuring light beam (23),
**characterized in that** the collimator module (21) furthermore comprises a field lens (28), which is arranged between the input/output face (26) of the optical waveguide (20) and the collimating lens (29) and defines the beam expansion of the measuring light beam (23) and therefore the focal diameter of the measuring light beam (23), and **in**
**that** the input/output face (26) of the optical waveguide (20) can be displaced relative to the optical axis of the collimating lens (29) with an accuracy of ≤10 µm in order to laterally adjust the focal position of the measuring light beam (23).

2. The device according to claim 1, **characterized in that** an optically active component for changing the polarization, particularly a Faraday rotator (27), is arranged in the collimator module (21) between the input/output face (26) of the optical waveguide (20) and the field lens (28) and rotates the polarization of the measuring light by 45°.

3. The device according to claim 1 or 2, **characterized in that** the input/output face (26) of the optical waveguide (20) is inclined relative to the vertical of the fiber axis by an angle of 8°.

4. The device according to claim 1, 2 or 3, **characterized in that** the collimating lens (29) can be displaced relative to the input/output face (26) of the optical waveguide (20) in the direction of its optical axis in order to axially adjust the focal position of the measuring light beam (23).

5. The device according to claim 2, **characterized in that** the input/output face (26) of the optical waveguide (20) can be displaced relative to the collimating lens (29) in the direction of its optical axis together with the Faraday rotator (27) and the field lens (28) in order to axially adjust the focal position of the measuring light beam (23).

6. The device according to claim 2, **characterized in that** the input/output face (26) of the optical waveguide (20) can be displaced together with the Faraday rotator (27).

7. The device according to one of the preceding claims, **characterized in that** the field lens (28) is arranged in the collimator module (21) in an exchangeable fashion.

8. The device according to one of the preceding claims, **characterized in that** the collimator module (21) is arranged on a welding head (22) guiding the processing laser beam (10) such that it can be displaced perpendicular to the optical axis of the processing laser beam (10).

9. The device according to claim 8, **characterized in that** the collimator module (21) is held on the welding head (22) in a displaceable fashion by means of an adapter piece (40).

10. The device according to claim 9, **characterized in that** the adapter piece (40) is realized in a rotatory fashion such that the collimator module (21) can be displaced in any direction.

11. The device according to one of the preceding claims, **characterized in that** a protective glass (32) is arranged in front of the focusing lens (25) and inclined relative to the vertical of the optical axis of the processing beam path by more than 3°.

## Revendications

1. Dispositif pour la mesure de la profondeur d'un cordon de soudure en temps réel lors du soudage ou du jointoyage d'une pièce à oeuvrer au moyen d'un rayonnement, comprenant une source de lumière de mesure, dont la lumière est couplée par un diviseur de rayonnement (17) dans un bras de référence (18) et dans un bras de mesure (19) ;
- un module collimateur (21) comprenant au moins une lentille de collimation (29) pour la collimation d'un rayon de lumière de mesure (23), lequel est amené au module de collimation (21) via un guide d'onde lumineuse (20) dans le bras de mesure (19), et pour la formation de l'image du rayon de lumière de mesure (23) réfléchie en retour depuis la pièce à oeuvrer sur une surface de sortie/entrée (26) du guide d'onde lumineuse (20);
- un élément de couplage (24) pour le couplage du rayon de lumière de mesure (23) dans le trajet d'un rayon de travail (10) ;
- une lentille de focalisation (25) pour la focalisation commune du rayon de lumière de mesure (23) et du rayon de travail (10) sur la pièce à oeuvrer et pour la collimation du rayon de lumière de mesure (23) réfléchi en retour ; et
- une unité d'évaluation (15) pour la détermination de la profondeur d'un cordon de soudure, dans laquelle le rayon de mesure réfléchi en retour depuis la pièce à oeuvrer est mené hors du bras de référence (18) avec superposition de la lumière réfléchie en retour ;
- dans lequel le module collimateur (21) inclut un moyen pour le réglage de la position focale axiale du rayon de lumière de mesure (23) et un moyen pour le réglage de la position focale latérale du rayon de lumière de mesure (23),
**caractérisé en ce que** le module collimateur (21) inclut en outre une lentille de champ (28), laquelle est agencée entre la surface de sortie/entrée (26) du guide d'onde lumineuse (20) et la lentille de collimation (29), et qui fixe l'élargissement du rayon de lumière de mesure (23) et ainsi le diamètre du foyer du rayon de lumière de mesure (23), et
**en ce que**, pour le réglage latéral de la position focale du rayon de lumière de mesure (23), la surface de sortie/entrée (26) du guide d'onde lumineuse (20) est déplaçable par rapport à l'axe optique de la lentille de collimation (29) avec une précisions ≤ 10 µm.

2. Dispositif selon la revendication 1, **caractérisé en ce que**, dans le module collimateur (21) entre la surface de sortie/entrée (26) du guide d'onde lumineuse (20) et la lentille de champ (28), il est prévu un élément structurel optiquement actif pour modifier la polarisation, en particulier un rotateur de Faraday (27), qui fait tourner la polarisation de la lumière de mesure de 45°.

3. Dispositif selon la revendication 1 ou 2, **caractérisé en ce que** la surface de sortie/entrée (26) du guide d'onde lumineuse (20) présente un angle d'inclinaison de 8° par rapport à la perpendiculaire à l'axe de fibres.

4. Dispositif selon la revendication 1, 2 ou 3, **caractérisé en ce que** pour le réglage axial de la position focale du rayon de lumière de mesure (23) la lentille de collimation (29) est déplaçable en direction de son axe optique par rapport à la surface de sortie/entrée (26) du guide d'onde lumineuse (20).

5. Dispositif selon la revendication 2, **caractérisé en ce que** pour le réglage axial de la position focale du rayon de lumière de mesure (23) la surface de sortie/entrée (26) du guide d'onde lumineuse (20) est déplaçable conjointement avec le rotateur de Faraday (27) et la lentille de champ (28) par rapport à la lentille de collimation (29) en direction de son axe optique.

6. Dispositif selon la revendication 2, **caractérisé en ce que** la surface de sortie/entrée (26) du guide d'onde lumineuse (20) est déplaçable conjointement avec le rotateur de Faraday (27).

7. Dispositif selon l'une des revendications précédentes, **caractérisé en ce que** la lentille de champ (28) est agencé de façon interchangeable dans le module collimateur (21).

8. Dispositif selon l'une des revendications précédentes, **caractérisé en ce que** le module collimateur (21) est agencé sur une tête de soudage (22) qui guide le rayon laser de travail de façon déplaçable perpendiculairement à l'axe optique du rayon laser de travail (10).

9. Dispositif selon la revendication 8, **caractérisé en ce que** le module collimateur (21) est retenu au moyen d'une pièce d'adaptateur (40) de manière déplaçable sur la tête de soudage (22).

10. Dispositif selon la revendication 9, **caractérisé en ce que** la pièce d'adaptateur (40) est réalisée de manière rotative, de sorte que le module collimateur (21) peut être déplacé dans une direction quelconque.

11. Dispositif selon l'une des revendications précédentes, **caractérisé en ce qu'**une vitre protectrice (32) est agencée devant la lentille de focalisation (25), vitre qui est inclinée d'une inclinaison de plus de 3° par rapport à la perpendiculaire à l'axe optique du rayon de travail.
